# EUROPÄISCHE PATENTSCHRIFT

(11) **EP 0 352 226 B1**
(45) Veröffentlichungstag und Bekanntmachung des Hinweises auf die Patenterteilung: **21.07.1993**
(21) Anmeldenummer: 89810497.1
(22) Anmeldetag: 30.06.1989
(51) Int. Cl.: F16B 13/14, C09K 3/00, C04B 40/06

(54) **Ankerstange**
Anchoring bolt
Boulon d'ancrage

(30) Priorität: 08.07.1988 DE 3823163
(43) Veröffentlichungstag der Anmeldung: 24.01.1990
(73) Patentinhaber: HILTI Aktiengesellschaft, 9494 Schaan (LI)
(72) Erfinder: Froehlich, Peter, D-8027 Neuried (DE); Gebauer, Ludwig, D-8037 Olching 2 (DE); Hartmann, Manfred, D-8912 Kaufering (DE); Mirsberger, Helmut, D-8000 Mühcnen 70 (DE); Moench, Monika, D-8910 Landsberg/Lech (DE)
(74) Vertreter: Wildi, Roland

(56) Entgegenhaltungen:
- WO-A-88/07141
- DE-A- 2 426 618
- FR-A- 2 398 209
- US-A- 4 576 524

## Beschreibung

Die Erfindung betrifft eine Ankerstange zur Verankerung in einer Ausnehmung eines Bauteiles mittels aushärtender Mörtelmassen, wobei die Ankerstange zumindest abschnittsweise mit die Adhäsion zwischen Ankerstange und ausgehärteter Mörtelmasse verhindernden Mitteln versehen ist.

Zur Durchführung von Verankerungen in Bauteilen aus Beton oder Gestein ist es bekannt, Ankerstangen mittels aushärtender Mörtelmassen in Ausnehmungen der Bauteile festzulegen. Eine solche Verankerung ist beispielsweise aus der DE-PS 24 26 618 bekannt, bei welcher eine Ankerstange mit sich erweiterndem Querschnitt verwendet wird. Als Mörtelmasse können beliebig hirtende Massen, zB hydraulisch abbindende, im wesentlichen anorganische Massen und/oder gegebenenfalls Füllmittel enthaltende, organisch abbindende Stoffe aufweisende Massen, sogenannte Kunstharzmörtel, verwendet werden. Bekannt sind beispielsweise Mörtel auf Polyesterbasis. Nebst den Mörteln der genannten Art haben sich auch Mörtelmassen auf der Basis von Acrylatharzen, Epoxyacrylatharzen, Epoxidharzen und Polyurethansystemen bewährt. Meist handelt es sich dabei um Zweikomponentensysteme, welche oft voneinander getrennt der Ausnehmung zugeführt und anschliessend darin vermischt werden oder in speziellen Geräten ausserhalb der Ausnehmung vermischt und die Ausnehmung mit dem bereits fertigen Gemisch angefüllt wird.

Da Bauteile der genannten Art nur eine relativ geringe Zugfestigkeit aufweisen, treten in der Zugzone häufig Risse auf. Sind Verankerungen der genannten Art in der Zugzone solcher Bauteile vorhanden, ist es nicht ausgeschlossen, dass sich die Verankerung im Bereich eines oder mehrerer, im ungünstigen Falle sich kreuzender Risse befindet. Dies hat zur Folge, dass zwischen Mörtel und Wandung der Ausnehmung ein derart starkes axiales Verschieben auftritt, dass es zu einem vollständigen Versagen der Verankerung kommen kann.

Diese Gefahr ist insbesondere bei veränderlichen Rissbreiten, zB hervorgerufen durch Belastungsänderungen, ausserordentlich hoch.

Aus der US-PS 4 576 524 ist eine Verbundankerstange mit einem mittleren, gewindelosen Abschnitt geringeren Durchmessers bekannt, der mit einem den Kleber bzw. die Mörtelmasse abweisenden Trennmittel versehen ist, bekannt. Der Verankerungsbereich dieser Ankerstange ist mit einem Gewinde versehen, das in der Mörtelmasse eingebettet ist. Das Festziehen des Lastangriffsmittels in Form einer Sechskantmutter ist problematisch, da einerseits die Ankerstange keine Reibung gegenüber der ausgehärteten Mörtelmasse aufweist und andererseits der gewindeartige Verankerungsbereich das Verdrehen der Ankerstange zulässt.

Der Erfindung liegt die Aufgabe zugrunde, eine Ankerstange, welche die adhäsive Bindung zwischen Ankerstange und ausgehärteter Mörtelmasse verhindernde Mittel aufweist, derart auszubilden, dass eine sichere Verankerung der Ankerstange ohne Verdrehung derselben gewährleistet ist.

Erfindungsgemäss wird die Aufgabe dadurch gelöst, dass der Verankerungsbereich der Ankerstange zumindest abschnittsweise wenigstens einen sich in Einführrichtung erweiternden Querschnitt mit über den Umfang verteilten Längsrippen aufweist.

In ungerissenen Bauteilen ist die Ankerstange aufgrund des sich erweiternden Querschnittes in der ausgehärteten Mörtelmasse formschlüssig verankert. Zwischen Wandung der Ausnehmung und Mörtelmasse ist ein ausreichender Verbund vorhanden.

Bei gerissenen Bauteilen kann die auf die Ankerstange einwirkende Zugbelastung im Bereich des sich erweiternden Querschnittes der Ankerstange zu einem Aufspalten gegebenenfalls nach vorangegangener plastischer Verformung der ausgehärteten Mörtelmasse führen, da mangels Adhäsion zwischen ausgehärteter Mörtelmasse und Verankerungsbereich der Ankerstange eine Relativverschiebung erfolgen kann. Dieses Aufspalten der ausgehärteten Mörtelmasse führt in aller Regel dazu, dass Mörtelsegmente entstehen, welche aufgrund der Wirkung des erweiterten Querschnittes der Ankerstange gegen die Wandung der Ausnehmung gepresst werden. Damit entstehen selbst bei weitgehender Aufhebung des Verbundes zwischen der Wandung der Ausnehmung und der ausgehärteten Mörtelmasse aufgrund der auf die Ankerstange einwirkenden axialen Zugkräfte derartige von der Achse der Ankerstange abweichende Druckkräfte, dass ein Versagen der Verankerung vermieden wird. Insbesondere hat es sich gezeigt, dass wohl als folge des Fehlens der adhäsiven Verbindung zwischen ausgehärteter Mörtelmasse und Ankerstange der Verbund im äusseren Bereich der Ausnehmung zwischen deren Wandung und der ausgehärteten Mörtelmasse bestehen bleibt.

Die über den Umfang verteilten, am erweiterten Querschnitt angeordneten Längsrippen bilden einen Widerstand gegen Verdrehung der Ankerstange sowie einen Formschluss mit der die Ankerstange umgebenden Mörtelmasse. Beim Einleiten eines Aufweitvorganges erfolgt somit eine reine axiale Versetzung der Ankerstange ohne Drehung. Die Längsrippen können derart spitzkantig ausgebildet sein, dass sie Schneidkanten bilden, die die umgebende Mörtelmasse gegebenenfalls nach vorangegangener plastischer Verformung definiert aufspalten. Auf diese Weise entstehen einzelne Mörtelmasse-Segmente, die ein besseres Aufspreizverhalten besitzen.

Einerseits können die der Verhinderung der Adhäsion zwischen Ankerstange und ausgehärteter Mörtelmasse dienenden Mittel der Mörtelmasse zugeordnet sein. Dabei ist es unerheblich, ob die Mörtelmasse beispielsweise bei Verwendung eines Mehrkomponentensystems erst innerhalb der Ausnehmung vermischt wird oder bereits vermischt in die Ausnehmung eingeführt wird. Solche der Aushärtung im Kontaktbereich der Ankerstange entgegenwirkende Mittel können bestehen aus Verbindungen, die ihre die Härtung inhibierende Wirkung erst unter Einfluss der Metalle bzw Metallionen der Ankerstange im Kontaktbereich mit der Mörtelmasse entfalten, sei es weil sie erst dabei gebildet werden, sei es aus katalytischen Gründen oder sei es weil die Härter unter diesen Bedingungen im Kontaktbereich desaktiviert oder zersetzt werden. Dies hängt von den jeweils zur Anwendung gelangenden Systemen ab. Es können beispielsweise Hydrochinone oder Kresole bei Epoxyacrylaten Verwendung finden, zB 2,6-di-tert Butyl-p-Kresol.

Andererseits können die der Verhinderung der Adhäsion zwischen Verankerungsbereich der Ankerstange und ausgehärteter Mörtelmasse dienenden Mittel der Ankerstange zugeordnet sein.

Dabei weist die Ankerstange in ihrem Verankerungsbereich der Aushärtung der Mörtelmasse im Kontaktbereich mit dem Verankerungsbereich der Ankerstange entgegenwirkende Mittel auf. Solche der Aushärtung der Mörtelmasse im Kontaktbereich entgegenwirkende Mittel können als Be schichtung, beispielsweise in Form eines Lackes, auf der Oberfläche des Verankerungsbereiches vorgesehen sein. Die Oberfläche kann auch mit einer Metall- bzw metallhaltigen oder metallionenhaltigen Beschichtung versehen sein.

Bei Verwendung eines Lackes als Beschichtung kann diesem insbesondere bei radikalisch aushärtenden Reaktionsharzsystemen als Mittel, zB t-Butylcatechol beigesetzt sein. Dieselbe Wirkung wird erreicht, wenn ein der Aushärtung der Mörtelmasse im Kontaktbereich selbst entgegenwirkender Lack verwendet wird, beispielsweise ein Phenolharzlack. Aus einem Metall bestehende Beschichtungen können zB galvanisch aufgebracht werden, wobei sich wiederum bei radikalisch aushärtenden Reaktionsharzsystemen zB Kupfer eignet. Ebenso können Beschichtungen aufgebracht werden, welche die der Härtung der Mörtelmasse im Kontaktbereich entgegenwirkenden metallischen oder metallionenhaltigen Zusätze aufweisen. Dies kann zB durch Eintauchen der Ankerstangen in metallsalzhaltige, wässrige Lösung oder durch Beschichten mit entsprechenden metallsalzhaltigen Bindemitteln geschehen. Der Wirkung solcher Beschichtungen gleich kommt die Verwendung eines entsprechende Metalle beinhaltenden Materials für die Ankerstange, zB Messing.

Die Ankerstange ist zur Verhinderung der Adhäsion mit der ausgehärteten Mörtelmasse mit einem der adhäsiven Verbindung entgegenwirkenden Trennmittel versehen, das auf der Oberfläche des Verankerungsbereiches der Ankerstange angeordnet ist. Bei einem solchen Trennmittel kann es sich um Kunststoffe oder anderweitige Materialien handeln, welche übliche, an sich auch aus anderen Gebieten bekannte Gleiteigenschaften aufweisen. In Betracht kommen beispielsweise Mittel auf der Basis von Polysiloxan, Polyolefin, Polytetrafluoräthylen, Polyäthylen, Polypropylen und dergleichen. Daneben eignen sich auch Gleitmittel, wie Graphit, Zinksulfid Molybdändisulfid, Metallseifen, Wachse und dergleichen. Das Aufbringen solcher Trennmittel kann durch Tauchen, Spritzen, Bestreichen und dergleichen erfolgen, wobei sich geeignete Materialien auch als Schrumpfschläuche, Folien oder Formteile aufbringen lassen.

Ein der Inhibierung der Adhäsion zwischen Ankerstange und ausgehärteter Mörtelmasse dienendes Mittel kann auch in der Oberflächenbeschaffenheit des Verankerungsbereiches der Ankerstange liegen. Hier wird der Umstand ausgenutzt, dass mit einer hochwertigen Oberfläche, welche beispielsweise durch Polieren oder Superfinish erreicht wird, dieselben Eigenschaften wie mit einem Gleitmittel erzielt werden.

Falls es zu einer geringfügigen Adhäsion zwischen Verankerungsbereich der Ankerstange und ausgehärteter Mörtelmasse kommen sollte, ist eine solche für die erfindungsgemäss erwünschte Funktion der Verankerung unerheblich, da eine Trennung zwischen ausgehärteter Mörtelmasse und Ankerstange schon bei geringer Krafteinwirkung erfolgt. Unter die Adhäsion verhindernden bzw adhäsionsinhibierenden Mitteln werden somit nicht nur solche Mittel verstanden, welche jegliche Adhäsion unterbinden, sondern auch solche Mittel, welche die Adhäsion so gering halten, dass die Verschiebbarkeit der Ankerstangen unter vorgegebener Belastung beim Auftreten von Rissen in den Bauteilen nicht behindert wird.

Zur Aufhebung einer allfälligen Restadhäsion können mechanische Massnahmen getroffen werden, wie eine Krafteinleitung auf die Ankerstange durch Schlag oder Schwingung. Auf diese Weise ist es auch möglich, die gesamte Adhäsion zwischen Ankerstange und ausgehärteter Mörtelmasse aufzuheben. Damit können die der Verhinderung der Adhäsion zwischen ausgehärteter Mörtelmasse und Ankerstange dienenden Mittel auch in mechanischen Massnahmen, wie Schlag- oder Schwingungseinwirkung liegen. Ebenso sind als diesbezügliche Mittel thermische Massnahmen zur Verhinderung der Adhäsion möglich.

Es hat sich gezeigt, dass die ausreichende Aufspaltung gegebenenfalls nach vorangegangener plastischer Verformung der ausgehärteten Mörtelmasse sowie die darauf einwirkende Krafteinleitung durch die Ankerstange massgebend von der Ausgestaltung der Querschnittserweiterung des Verankerungsbereiches des Ankerstange abhängig ist. Vom Querschnitt her gesehen können die Erweiterungen einen kreisförmigen oder polygonalen Querschnitt aufweisen. Ankerstangen, welche eine Querschnittserweiterung mit polygonalem Querschnitt aufweisen, haben den Vorteil, dass damit eine zusätzliche Verdrehsicherung erreicht wird. Eine solche Verdrehsicherung ist insbesondere in der Anfangsphase der Belastung der Ankerstange, wenn diese in Verbindung mit dem Aufbringen eines Drehmomentes erfolgt, massgebend. Bezüglich der Querschnittserweiterung mit polygonalem Querschnitt bieten sich verschiedene Ausbildungsmöglichkeiten. Insbesondere kann die Kontur konvex oder konkav ausgebildet sein. Bezüglich der Aufspaltung der ausgeharteten Mörtelmasse hat sich eine kegelförmige Querschnittserweiterung des Verankerungsbereiches mit einem Kegelwinkel zwischen 10° und 90°, vorzugsweise zwischen 10° und 60°. Darüber hinaus eignet sich die kegelförmige Querschnittserweiterung besonders dann, wenn der grösste Querschnitt der Erweiterung nicht grösser als das 7-fache, vorzugsweise nicht grösser als das 4-fache des kleinsten Schaftquerschnittes des Verankerungsbereiches ist.

Anstelle von geradlinigen, kegelförmigen Querschnittserweiterungen können auch Erweiterungen mit einer konkaven oder konvexen Aussenkontur verwendet werden, wobei durch diesbezügliche Konturen mit Vorteil wiederum die vorgenannten Winkelbereiche abgedeckt werden. Nebst einer Querschnittserweiterung können auch mehrere, beispielsweise zwei gleichgerichtete oder auch gegeneinander weisende Erweiterungen hintereinander angeordnet sein.

Darüber hinaus schaffen Querschnittserweiterungen mit polygonalem Querschnitt in Längsrichtung der Ankerstange verlaufende Kanten, deren Eigenschaft dazu ausgenutzt werden kann, die Mörtelmasse gegebenenfalls nach vorangegangener plastischer Verformung definiert aufzuspalten. Diese Wirkung kann durch Anordnung zusätzlicher Längsrippen entlang des Verankerungsbereiches der Ankerstange verstärkt werden.

Die Erfindung wird nachstehend anhand von Zeichnungen, die Ausführungsbeispiele wiedergeben, näher erläutert. Es zeigen:
- Fig. 1: eine verankerte Ankerstange;
- Fig. 1a: einen Grundriss der Anordnung nach Fig. 1;
- Fig. 2 - 3: weitere Ausbildungsformen von Ankerstangen;
- Fig. 3a: einen Schnitt durch die Ankerstange nach Fig. 3, gemäss schnittverlauf III-III;
- Fig. 4: eine weitere Ausbildungsform einer Ankerstange;
- Fig. 4a: einen Schnitt durch die Ankerstange nach Fig. 4, gemäss Schnittverlauf IV-IV;
- Fig. 5: eine weitere Ausbildungsform einer Ankerstange;
- Fig. 5a: einen Schnitt durch die Ankerstange nach Fig. 5, gemäss schnittverlauf V-V.

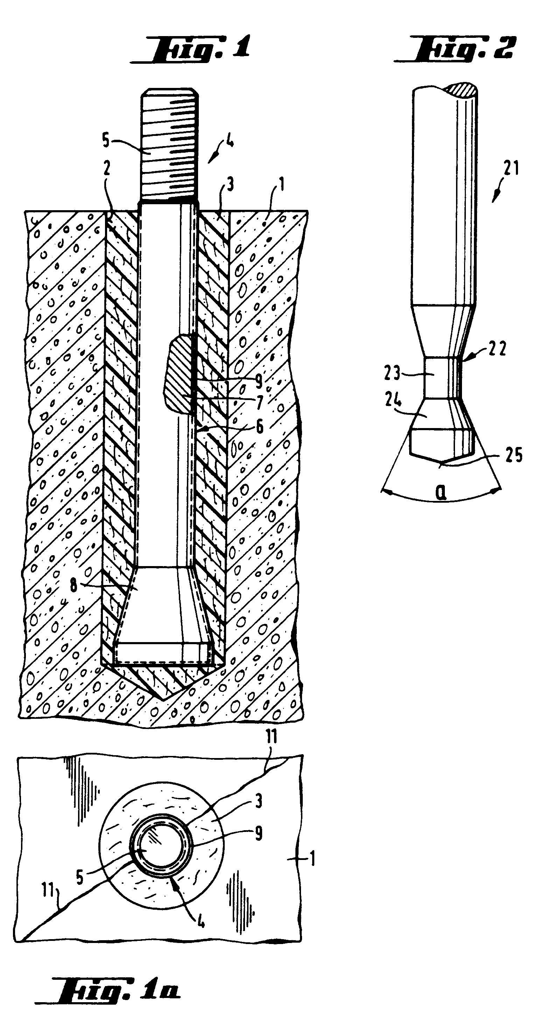

Die Fig. 1 und 1a zeigen ein Risse 11 aufweisendes Bauteil 1 aus Beton, mit einer Ausnehmung 2 in Form einer zylindrischen Bohrung. In der Ausnehmung 2 ist mittels einer aushärtenden Mörtelmasse 3 eine Ankerstange 4 verankert. Die Ankerstange 4 weist ein Lastangriffsmittel 5 in Form eines Aussengewindes auf. Der in die Ausnehmung 2 einragende Teil der Ankerstange 4 dient als Verankerungsbereich 6. Der Verankerungsbereich 6 besteht aus einem zylindrischen Abschnitt 7 und aus einer an diesen zum freien Ende hin anschliessenden Querschnittserweiterung 8. Der Verankerungsbereich 6 weist beispielsweise einen Ueberzug aus Lack 9, mit auf die Aushärtung der Mörtelmasse 3 im Kontaktbereich inhibierende Wirkung auf. Dadurch entsteht nach Aushärten der Mörtelmasse 3 keine oder keine nennenswerte adhäsive Verbindung mit der Oberfläche des Verankerungsbereiches 6.

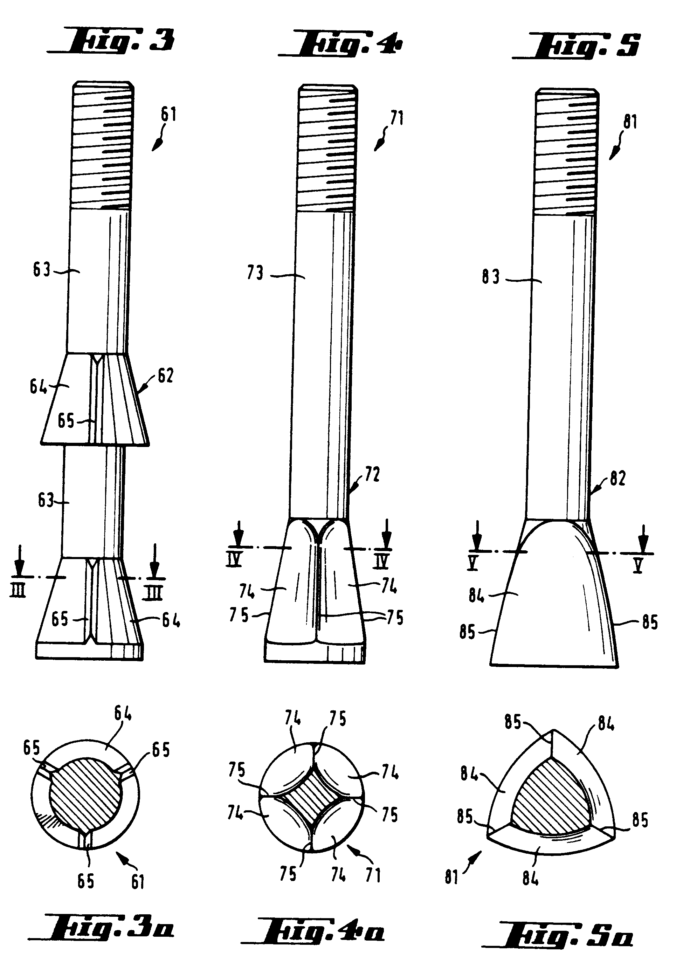

Die Fig. 2 zeigt eine Ankerstange 21 mit einem Verankerungsbereich 22. Dieser weist einen zylindrischen Abschnitt 23 in Form einer Einschnürung auf, an den sich die wirksame Querschnittserweiterung 24 anschliesst. Damit liegt der Angriffspunkt der von der Achse der Ankerstange 21 abweichenden resultierenden Kraft innerhalb des Durchmessers der Ankerstange 21. Der Kegelwinkel a der Querschnittserweiterung 24 beträgt bei diesem Ausführungsbeispiel etwa 60°, Die freie Stirnseite der Erweiterung 24 weist eine Dachschneide 25 auf.

In der Fig. 3 ist eine Ankerstange 61 dargestellt, die einen Verankerungsbereich 62 aufweist. Der Verankerungsbereich 62 besteht aus jeweils zwei hintereinander angeordneten, zylindrischen Abschnitten 63 und kegelförmigen Querschnittserweiterungen 64, die aussenseitig mit über den Umfang verteilten Längsrippen 65 versehen sind, wie die auch die Fig. 3a verdeutlicht. Die Längsrippen 65 fördern das Aufspalten der ausgehärteten Mörtelmasse.

Die Ankerstange 71 nach Fig. 4 weist einen Verankerungsbereich 72 auf, der aus einem zylindrischen Abschnitt 73 und einer kegelförmigen Querschnittserweiterung 74 mit im wesentlichen polygonalem Querschnitt besteht. Die Aussenkontur des polygonalen Querschnittes ist beispielsweise durch vier konkav gewölbte Flächen gebildet, deren gegenseitige Uebergänge vier in Längsrichtung der Querschnittserweiterung 74 verlaufende Kanten 75 schaffen, wie dies die Fig. 4a verdeutlicht.

Bei der Ankerstange 81 nach Fig. 5 besteht der Verankerungsbereich 82 wiederum aus einem zylindrischen Abschnitt 83 und aus einer kegelförmgien Querchnittserweiterung 84 mit im wesentlichen polygonalem Querschnitt. Die Aussenkontur des polygonalen Querschnittes weist drei konvex gewölbte Flächen auf, deren gegenseitige Uebergänge drei in Längsrichtung der Querschnittserweiterung 84 verlaufende Kanten 85 bilden, wie dies die Fig. 5a verdeutlicht.

Durch die polygonale Querschnittsform der Querschnittserweiterung 74, 84 entsprechend Fig. 4,5 wird eine zusätzliche Verdrehsicherung der Ankerstange 71, 81 gegenüber der ausgehärteten Mörtelmasse erreicht. Die Kanten 75, 85 der Querschnittserweiterung 74, 84 gewährleisten ein definiertes Aufspalten der ausgehärteten Mörtelmasse, gegebenenfalls nach vorangegangener plastischer Verformung.

Die Funktionsweise der Ankerstangen nach den Fig. 2 bis 5 entspricht der Anordnung nach Fig. 1, wobei bei jeder Ausführungsform die zur Verhinderung der Adhäsion führenden Massnahmen getroffen werden können. Die Ankerstangen können je nach Anwendungsfall und Anwendung findenden Mörtelmassen gestaltet werden. Dabei weisen vorzugsweise in jenen Anwendungsfällen, wo die Mörtelmassen innerhalb der Ausnehmung vermischt werden, die Ankerstangen Dachschneiden im vorerwähnten Sinne auf.

## Patentansprüche

1. Ankerstange (4, 21, 61, 71, 81) zur Verankerung in einer Ausnehmung (2) eines Bauteiles (1) mittels aushärtender Mörtelmassen (3), wobei die Ankerstange (4, 21, 61, 71, 81) mit die Adhäsion zwischen Ankerstange (4, 21, 61, 71, 81) und ausgehärteter Mörtelmasse (3) verhindernden Mitteln versehen ist, **dadurch gekennzeichnet,** dass der Verankerungsbereich (6, 22, 62, 72, 82) der Ankerstange (4, 21, 61, 71, 81) zumindest abschnittsweise wenigstens einen sich in Einführrichtung erweiternden Querschnitt mit über den Umfang verteilten Längsrippen (65) aufweist.

2. Ankerstange nach Anspruch 1, dadurch gegekennzeichnet, dass die Querschnittserweiterung einen kreisförmigen (8, 24, 64) oder polygonalen (74, 84) Querschnitt aufweist.

3. Ankerstange nach Ansruch 1 oder 2, dadurch gekennzeichnet, dass die Querschnittserweiterung mit einem Kegelwinkel (a) von 10° bis 90°, vorzugsweise 10° bis 60°, ausgebildet ist.

4. Ankerstange nach einem der Ansprüche 1 bis 3, dadurch gekennzeichnet, dass der grösste Querschnitt der Querschnittserweiterung (8, 24, 64, 74, 84) bis zum 7-fachen, vorzugsweise bis dem 4-fachen, des kleinsten Schaftquerschnittes (d) des Verankerungsbereiches (6, 22, 62, 72, 82) entspricht.

## Claims

1. Anchoring rod (4, 21, 61, 71, 81) for anchorage in a cut-out (2) of a component (1) by means of hardening mortar (3), wherein the anchoring rod (4, 21, 61, 71, 81) is provided with means for the prevention of adhesion between the anchoring rod (4, 21, 61, 71, 81) and the hardened mortar (3), **characterised in that** the anchorage area (6, 22, 62, 72, 82) of the anchoring rod (4, 21, 61, 71, 81) has at least sectionally at least one cross-section which widens in the direction of insertion with peripherally spaced longitudinal webs (65).

2. Anchoring rod according to claim 1, **characterised in that** the cross-sectional widening has a circular (8, 24, 64) or polygonal (74, 84) cross-section.

3. Anchoring rod according to claim 1 or 2, **characterised in that** the cross-sectional widening is arranged at a conical angle (a) of between 10̸ and 90̸°, preferably between 10̸ and 60̸°.

4. Anchoring rod according to one of claims 1 to 3, **characterised in that** the largest cross-section of the cross-sectional widening (8, 24, 64, 74, 84) corresponds with up to 7 times, preferably up to 4 times, the smallest shaft cross-section (d) of the anchorage area (6, 22, 62, 72, 82).

## Revendications

1. Boulon d'ancrage (4, 21, 61, 71, 81) pour l'ancrage dans un évidement (2) d'un élément de construction (1) au moyen de masses de mortier (3) durcissables, le boulon d'ancrage (4, 21, 61, 71, 81) étant muni de moyens qui empêchent l'adhésion entre ledit boulon d'ancrage (4, 21, 61, 71, 81) et la masse de mortier (3) durcie, **caractérisé en ce** que la zone d'ancrage (6, 22, 62, 72, 82) du boulon d'ancrage (4, 21, 61, 71, 81) présente, au moins par sections, au moins une section transversale qui s'élargit dans la direction d'introduction, avec des nervures longitudinales (65) réparties sur la circonférence.

2. Boulon d'ancrage selon la revendication 1, caractérisé en ce que l'élargissement de la section transversale présente une section transversale circulaire (8, 24, 64) ou polygonale (74, 84).

3. Boulon d'ancrage selon l'une des revendications 1 ou 2, caractérisé en ce que l'élargissement de la section transversale présente un angle de cône (a) de 10° à 90°, de préférence de 10° à 60°.

4. Boulon d'ancrage selon l'une des revendications 1 à 3, caractérisé en ce que la plus grande section transversale de l'élargissement de la section transversale (8, 24, 64, 74, 84) correspond à jusqu'à 7 fois, de préférence jusqu'à 4 fois la section transversale minimale (d) de la tige de la zone d'ancrage (6, 22, 62, 72, 82).
